# EUROPÄISCHE PATENTANMELDUNG

(11) **EP 2 039 896 A2**
(43) Veröffentlichungstag der Anmeldung: **25.03.2009**
(21) Anmeldenummer: 08164661.4
(22) Anmeldetag: 19.09.2008
(51) Int. Cl.: F01M 13/04, F16N 39/00

(54) **Vorrichtung zur Abscheidung von Öl aus einem Luftstrom**

(30) Priorität: 21.09.2007 DE 202007013327 U
(71) Anmelder: MANN+HUMMEL GmbH, 71638 Ludwigsburg (DE)
(72) Erfinder: Heikamp, Wolfgang, 67615, Waldsee (DE); Schippers, Carsten, 67354, Römerberg (DE); Melde, Markus, 67346, Speyer (DE)

(57) **Zusammenfassung**

Es wird eine Vorrichtung zur Abscheidung von Öl aus einem Luftstrom mit einem Filte r-element (3) und einer Druckbeaufschlagung des Luftstroms zur Durchströmung des Fi I-terelements (3) vorgeschlagen, bei der zur Druckbeaufschlagung des Luftstroms eine Pumpe (4) vor oder hinter dem Filterelement (3) angeordnet ist. Die Pumpe (4) kann vorzugsweise als Vakuumpumpe hinter dem Filterelement (3) a ngeordnet werden und wird in Abhängigkeit des im Kurbelgehäuse anliegenden Druck es geregelt.

## Beschreibung

### Technisches Gebiet

Die Erfindung betrifft eine Vorrichtung zur Abscheidung von Öl aus einem Luftstrom nach der Gattung des Hauptanspruchs.

### Stand der Technik

Bei einer Vielzahl von Anwendungen im Maschinenbau und insbesondere in der Kraftfahrzeugtechnik treten zum Beispiel Gase auf, die mit festen oder flüssigen Partikeln verunreinigt sind, wie zum Beispiel Metall- oder sonstige Schmutzteile und auch Öl- oder Kraftstofftröpfchen und Rußpartikel, die für eine Weiterbehandlung des Gases schädlich sind und unter Umständen auch sehr schnell zu Verstopfungen in Filtern führen können. Insbesondere ist dies bei dem Kurbelwellengehäusegas einer Brennkraftmaschine der Fall, das dann in der Regel über einen Ölabscheider bzw. einem sogenannten Luftentölelement zur Beseitigung der Verunreinigung geführt wird.

Aus der EP 0 611 876 B1 ist beispielsweise ein Ölabscheider für die Gase eines Kurbelwellengehäuses einer Brennkraftmaschine bekannt, bei dem ein Filterelement vorhanden ist, das von den Durchblasgasen durchströmt wird und bei dem das abgeschiedene Öl über einen Ölrücklauf in einen Ölbehälter zurückgeführt wird. Die so entölten Durchblasgase werden dann dem Luftansaugsystem der Brennkraftmaschine wieder zugeführt.

Bei diesem bekannten Ölabscheider wird zur Erhöhung der Effizienz der Entölung mittels eines Unterdrucks der Durchfluss der Durchblasgase durch den Ölabscheider verbessert, der über eine Ejektordüse erzeugt wird. Der Unterdruck wird dabei der Druckluft aus der Druckluftversorgung eines Kraftfahrzeugs entnommen und über eine einstellbare Drossel wird die Menge der zuzuführenden Druckluft geregelt.

Die Schrift DE 203 18 633 U1 zeigt eine Einrichtung für die Rück- oder Abführung und die Entölung des Kurbelgehäuse-Entlüftungsgases einer Brennkraftmaschine, bei dem die Einrichtung einschließlich der Pumpe zur Erzeugung des Unterdruckes ein Modul oder Teil eines Moduls ist.

In dem Dokument EP 1 464 797 B1 wird ein Ölabscheider für die Reinigung von Ölnebel enthaltendem Kurbelgehäuseentlüftungsgas einer Brennkraftmaschine beschrieben mit einem rotierenden Ölabscheideelement oder Laufrad, das ohne Achsdurchführung berührungslos in Drehung versetzbar ist.

Das Dokument DE 101 53 120 A1 wie auch das zur gleichen Patentfamilie gehörende Dokument DE 2003 18 633 U1 offenbart eine Einrichtung für die Entlüftung des Kurbelgehäuse einer Brennkraftmaschine mit einer Entlüftungsleitung, in der eine Pumpeinrichtung zur Erhöhung des Wirkungsgrades des Ölabscheiders vorgesehen ist, um im Kurbelgehäuse ein Unterdruck gegenüber dem Umgebungsdruck zu erzeugen. Die Pumpeinrichtung ist dabei in Strömungsrichtung nach dem Ölabscheider angeordnet.

In der Schrift DE 20 2004 005 813 U1 wird eine Vorrichtung zum Absaugen von aerosolhaltigen Gasgemischen von einer Werkzeugmaschine beschrieben bei der ein Ölabscheider mit einer Druckentlastungseinrichtung in Form eines Bersttopfes im Fall einer Explosion oder Verpuffung eine entstehende Druckwelle gefahrlos abbaut.

Die Veröffentlichung US 2006/196482 A1 zeigt ein Kurbelgehäuseentlüftungssystem für eine Brennkraftmaschine ohne Drosselklappe mit einem Kanister und einer Pumpe, die das Blow-By Gas in den Ansaugtrakt fördert und einer zweiten Pumpe, die, beispielsweise als Strahlpumpe ausgebildet, ein Spülgas aus dem Kanister fördert um es in das Blow-By Gas zu mischen.

Die Schrift DE 20 2007 013 145 U1 offenbart einen Abscheider für ein mit Flüssigkeitstropfen oder Nebel kontaminiertes gasförmiges Medium mit einer Unterdruck erzeugenden Vorrichtung und mit einem Auslassbereich, der über einer Druckausgleichsleitung mit dem Einlassbereich verbunden ist zur Rückführung eines Teils des gereinigten gasförmigen Mediums.

Das Dokument DE 20 2006 011 229 U1 beschreibt einen Ölbehälter mit einem Entlüftungssystem für einen Kompressor mit einem Oxidationskatalysator, den die Ölbehälterluft vor Austritt aus dem Entlüftungssytem durchströmt.

### Offenbarung der Erfindung

Die Erfindung betrifft eine Vorrichtung zur Abscheidung von Öl aus einem Luftstrom mit einem Filterelement und einer Druckbeaufschlagung des Luftstroms zur Durchströmung des Filterelements, beispielsweise zur Abscheidung von Öl aus den Kurbelwellengehäusegasen einer Brennkraftmaschine, wobei das gereinigte Gas dem Luftansaugweg der Brennkraftmaschine wieder zuführbar ist. Erfindungsgemäß wird in vorteilhafter Weise zur Druckbeaufschlagung des Luftstroms ein Verdichter oder gleichwirkend eine Pumpe vor oder hinter dem Filterelement angeordnet und mithilfe einer Regelung des Verdichters ein gleichmäßiger Unterdruck im Kurbelgehäuse erreicht. In der Vorrichtung eingebaute Ventile verhindern unzulässige Druckzustände im Kurbelgehäuseentlüftungssystem.

Eine Pumpe kann vorzugsweise als Vakuumpumpe, beispielsweise als sogenannte Drehschieberpumpe, ausgeführt werden und ist dann in besonders vorteilhafter Weise hinter dem Filterelement zur Ansaugung des Luftstroms angeordnet.

Der erfindungsgemäße Verdichter kann dabei auf einfache Weise extern elektrisch oder mechanisch angetrieben werden.

In einer Ausführungsform mit einem elektrisch an getriebenen Verdichter kann die Regelung des Verdichters elektronisch in Abhängigkeit vom dem im Kurbelgehäuse herrschenden Druck geregelt werden.

Die Erfindung sieht anstelle eines einfachen, aus dem Stand der Technik bekannten Druckregelventils, welches den Druck im Kurbelgehäuse in Abhängigkeit des Umgebungsdruckes durch das einfache Wirken einer Federkraft regelt, eine Druckregelung vor, welche direkt den Druck im Kurbelgehäuse der Brennkraftmaschine als Ist-Größe aufnimmt und diese mit der voreingestellten Sollgröße abgleicht. Die Regelung des Druckes erfolgt dann über einen zwischen Kurbelgehäuse und Ölabscheider, direkt in der Blow-By-Leitung befindlichen Verdichter, dessen Drehzahl über einen Frequenzumformer oder in anderer, dem Fachmann geläufigen Weise zu regeln ist. Die Drehzahl reguliert das Druckniveau vor und nach Verdichter und somit ebenfalls den Druck im Kurbelgehäuse. So kann unabhängig vom Beladungszustand des Ölabscheiders bzw. dessen bereits erreichten Lebensdauer und dem Ölgehalt im Blow-By-Gas, beziehungsweise dem Blow-By-Anfall, ein nahezu exakt konstanter Druck im Kurbelgehäuse eingeregelt werden.

Wird die Brennkraftmaschine abgestellt, geht der direkt mit der Motorsteuerung verbundene Verdichter in den Ruhezustand. So kann eine Evakuierung des Kurbelgehäuses vermieden werden. Beim Anlassen der Brennkraftmaschine wird ebenfalls der Verdichter gestartet, so dass nahezu ohne Zeitverzug der Druck im Kurbelgehäuse eine definierte Höhe erreicht.

Das Regelorgan dieser Erfindung ist der Verdichter. Der Verdichter kann in jeder denkbaren technischen Ausführung Verwendung finden, wobei unter dem Begriff Verdichter erfindungsgemäß eine Fördervorrichtung für kompressible Fluide, wie das Blow-By Gas verstanden wird.

In einer Ausgestaltung als mechanisch angetriebene Pumpe ist eine Verbindung des Antriebes mit der Brennkraftmaschine von Vorteil, indem die Regelung des Druckes in dem Ölabscheider durch einen ventilgesteuerten Bypass-Kanal erfolgt. Diese Kopplung an die Brennkraftmaschine kann beispielsweise über die Nockenwelle oder andere rotierende Bauteile der Brennkraftmaschine oder deren Nebenaggregate erfolgen.

Vorzugsweise ist das Filterelement ein Luftentölelement, beispielsweise als Boxenausführung, das aus einem Mikrofasermaterial, vorzugsweise Glasfaser, hergestellt ist und das in an sich bekannter Weise zu einem Wickelelement oder zu einem sternförmigen Element geformt werden kann.

In einer weiteren vorteilhaften Ausführungsform ist dem Ölabscheider in Strömungsrichtung ein Vorabscheider vorgeschaltet, der das Groböl abscheidet. Dieser Vorabscheider kann in Strömungsrichtung vor dem Verdichter oder der Pumpe angeordnet sein.

Eine vorteilhafte Ausgestaltung sieht einen Vorabscheider mit einem tangentialen Eintritt vor. Besonders Zyklonabscheider sind für diesen Anwendungsfall vorteilhaft. Dabei kann ein Einzelzyklon zum Einsatz kommen wie auch mehrere parallel geschaltete Zyklone. In einer besonderen Ausführung sind auch Zyklone in Reihe geschaltet vorteilhaft.

In einer weiteren Ausgestaltung ist ein Nachabscheider vorgesehen, der das nach dem Ölabscheider noch im Gas verbliebene Feinöl abscheidet.

Die Pumpe kann ein Kompressorschraubenelement aufweisen oder als Ladekompressor ausgestaltet sein.

In einer weiteren Ausführungsform verhindert ein Sicherheitsventil hinter der Entnahmestelle des Kurbelgehäuseentlüftungsgases aus dem Kurbelgehäuse einen unzulässig hohen Druck im Kurbelgehäuse. Bei zu hohem Druck, etwa bei einer Fehlfunktion oder einem Defekt der Brennkraftmaschine, öffnet das Sicherheitsventil und reduziert so den Druck im Kurbelgehäusesystem. Entweder wird der Druck ins Freie abgelassen oder mit einer zusätzlichen Leitung in den Ansaugtrakt der Brennkraftmaschine geführt.

Eine weitere vorteilhafte Ausführung sieht ein Rückschlagventil vor, dass bei unzulässiger Druckdifferenz zwischen Kurbelgehäuse und der Ölabscheidung einen Durchfluss des Öls aus dem Kurbelgehäuse in den Ansaugtrakt verhindert.

Ebenfalls von Vorteil ist ein Druckbegrenzungsventil oder eine Drossel in Form einer Blende in der Blow-By-Leitung vor dem Eintritt des gereinigten Blow-By-Gases in den Ansaugtrakt, die die Druckdifferenz zwischen dem Unterdruck im Ansaugtrakt und dem Druck in der Vorrichtung begrenzt. So wird ausgeschlossen, dass die Druckdifferenz zwischen Ansaugtrakt und Kurbelgehäuseentlüftung einen unzulässig hohen Wert erreicht.

Eine weitere Ausführungsform weist einen hydraulisch angetriebenen Verdichter auf, der stromabwärts auf der druckführenden Seite einer Ölpumpe der Brennkraftmaschine mittels des Öldruckes angetrieben wird und auf der stromzuführenden Seite der Ölpumpe diese das vom Ölabscheider abgeschiedene Öl ansaugt. So kann die ohnehin vorhandene Ölpumpe im Ölkreislauf der Brennkraftmaschiene ohne großen Zusatzaufwand zusätzlich zur ihrer eigentlichen Aufgabe, das Öl zu fördern, die Energie für die Druckerzeugung in der Kurbelgehäuseentlüftung liefern.

Besonders vorteilhaft ist die Ausgestaltung der Erfindung in einem Ölmodul, bei dem eine Auswahl der beschriebenen Funktionen in einem Bauteil integriert ist, das als Modul an die Brennkraftmaschine angeflanscht wird.

### Kurze Beschreibung der Zeichnungen

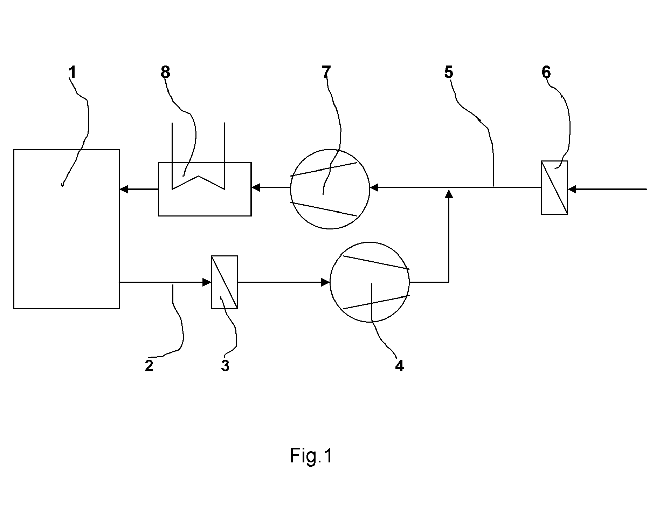

Die Erfindung wird anhand der Figur 1 der Zeichnung mit einem Ausführungsbeispiel erläutert, das schematisch die Kurbelwellengehäuseentlüftung einer Brennkraftmaschine mit einem Entölelement und einer erfindungsgemäßen Pumpe darstellt.

Die Figur 2 zeigt schematisch ein Ausführungsbeispiel einer Kurbelgehäuseentlüftung mit einem Vorabscheider vor der Pumpe und einer Anordnung der Pumpe vor dem Ölabscheider.

Der Figur 3 ist die schematische Darstellung einer Ausführung einer Kurbelgehäuseentlüftung zu entnehmen, bei der ein Verdichter stromabwärts auf der druckführenden Seite einer Ölpumpe angetrieben wird.

### Ausführungsform(en) der Erfindung

In Figur 1 ist eine schematische Darstellung eines Ausführungsbeispiels der Erfindung gezeigt, die eine Brennkraftmaschine 1 zeigt, deren Kurbelwellengehäusegase über eine Blow-By-Leitung 2 einem Luftentölungselement 3 zugeführt werden. Das Luftentölungselement 3 ist hier als Boxenvariante aus einem Mikrofasermaterial, vorzugsweise Glasfaser, gebildet.

Das Luftentölungselement 3 ist auf der Saugseite eines Luftförderorgans, hier eine Pumpe 4, angeordnet, das zum Beispiel als Vakuumpumpe, beispielsweise eine elektrisch oder mechanisch angetriebene Drehschieberpumpe, ausgeführt ist.

Weiterhin wird die somit entölte Luft in die Luftansaugleitung 5 für die Brennkraftmaschine 1 geführt, wobei die Ansaugluft zuvor über einen Luftfilter 6 auf der Ansaugseite gefiltert worden ist. In an sich bekannter Weise wird dann die Ansaugluft über einen Turbolader 7 und einen Ladeluftkühler 8 der Brennkraftmaschine 1 zugeführt.

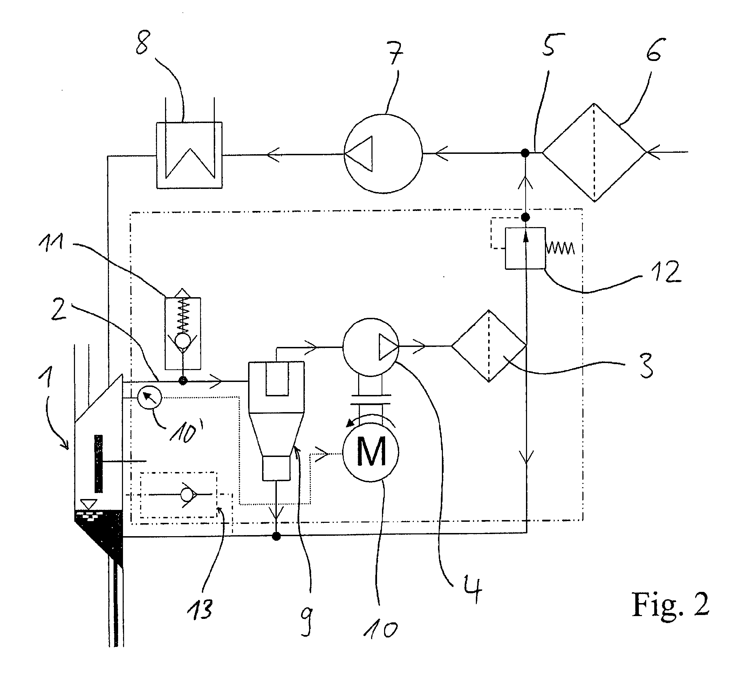

Die Figur 2 zeigt schematisch ein Ausführungsbeispiel einer Kurbelgehäuseentlüftung einer Brennkraftmaschine mit einem Vorabscheider 9 vor der Pumpe 4 und der Pumpe 4 vor dem Ölabscheider 3. Eine Pumpe 4 wird benötigt, um Blow-By-Gase durch einen hochabscheidenden Ölabscheider 3, der naturgemäß einen hohen Druckverlust besitzt, zu drücken. Ein möglicher Antrieb kann beispielsweise über einen separaten, drehzahlgeregelten Elektromotor 10 erfolgen, der in Abhängigkeit vom Kurbelgehäusedruck geregelt wird. Dazu ist ein Drucksensor 10' in Kurbelgehäuse angebracht, der den Druck detektiert und ein entsprechendes Signal an eine Regelung weiterleitet. Es wird ein Sicherheitsventil 11 hinter der Blow-By-Gas-Entnahmestelle des Kurbelgehäuses angeordnet, um einen unerwartet hohen Kurbelgehäusedruck schnell abführen zu können. Ein Druckregelventil 12, welches sich zwischen dem Ölabscheider 3 und der Einleitstelle zwischen Luftfilter 6 und Turbolader 7 befindet, begrenzt den entstehenden Unterdruck in der Ölrückführlei tung, welcher bei ansteigender Drehzahl der Brennkraftmaschine und anwachsendem Ansaugvolumenstrom durch den Luftfilter 6 im vorderen Bereich des Ansaugtraktes erzeugt wird. Durch dieses Druckregelventil 12 wird das Ansaugen des Öls aus der Ölwanne verhindert und die kontinuierliche Ölrückführung gewährleistet.

Je nach Platzierung der Anschlussstelle der Ölrückführung im Kurbelgehäuse, ist optional ein Rückschlagsperrventil 13 in der Ölrückführung anstelle einer direkten Verbindung zwischen Kurbelgehäuse und Ölrückführung vorgesehen, das verhindert, dass ungerei nigtes Blow-By-Gas über den Ölrücklauf des Ölabscheiders auf die Reinseite stromabwärts hinter den hochabscheidenden Ölabscheider 3 gelangt, falls der Druck im Kurbelgehäuse unzulässig ansteigt. Die Verwendung eines Rückschlagsperrventils ist unabhängig von der Lage der Anschlussstelle der Ölrückführung im Kurbelgehäuse oberhalb oder unterhalb des Ölspiegels, wobei eine Verwendung bei einem Anschluss über dem Ölspiegels von Vorteil ist.

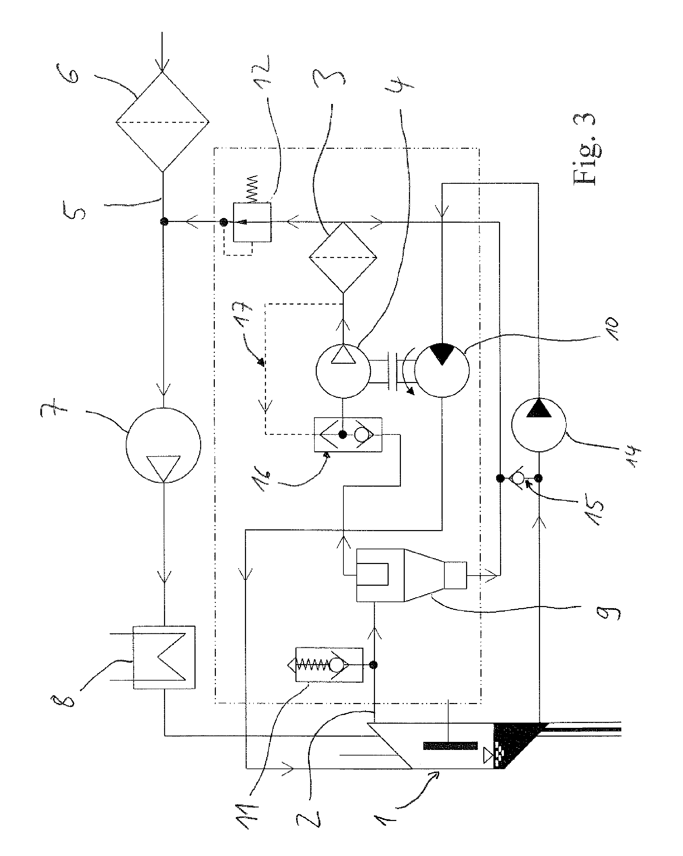

Die Figur 3 zeigt das Schema einer Ölabscheidung, bei der ein Verdichter 4 stromabwärts auf der druckführenden Seite einer Ölpumpe 14 angetrieben wird. Auf der stromzuführenden Seite, der Saugseite der Ölpumpe 14, wird das vom dem hochabscheidenden Ölabscheider 3 abgeschiedene Öl über ein Rückschlagventil 15 abgesaugt. Das Rückschlagventil verhindert, dass bei einem Überdruck im Kurbelgehäuse das Öl auf die Reinseite der Ölabscheidung gelangt. Bei einem Verdichter 4, welcher direkt durch die Brennkraftmaschine 1 oder deren Nebenaggregaten angetrieben wird, ist eine mit einem Umschaltventil 16 versehene Umgehungsleitung 17 von der stromabführenden Seite zur stromzuführenden Seite des Verdichters 4 installiert. Diese Maßnahme soll verhindern, dass bei variierenden Blow-By-Mengen, erzeugt durch Variation des Lastzustandes und der Drehzahl der Brennkraftmaschine, ein unzulässig großer Unterdruck im Kurbelgehäuse, welcher zu Undichtigkeiten und somit zum Eintrag von Umgebungsluft an der Ölwanne führt, entsteht.

Das Umschaltventil 16 ist in einer vorteilhaften Ausgestaltung als ein federgeregeltes Wechselventil ausgeführt, als ein Druckregelventil, das nicht mit der Atmosphäre kommuniziert. Es wird als eine Art pumpeneigenes Bypass-Ventil eingesetzt, das den Unterdruck im Kurbelgehäuse auf einen bestimmten Wert hält, während die Pumpe 4 dann das Blow-By-Gas in einem geschlossenen Kreislauf fördert, um zu erreichen, dass der Ölstrom zum Antrieb 10 einer mechanischen Pumpe 4, unverändert bleibt während die Pumpe nicht weiter Blow-By-Gas aus dem Kurbelgehäuse herausfördern kann. Dies hätte ein en zu hohen Ansaugunterdruck zur Folge und würde somit unter Umständen das Kurbelgehäuse schädigen.

Vor dem Verdichter 4 kann eine Vorabscheidung 9, beispielsweise durch einen Zyklon, integriert werden, um den Verdichter 4 und den hochabscheidenden Ölabscheider 3 nicht zur sehr mit dem im Öl transportierten Schmutzteilchen, beispielsweise Ruß, von der Brennkraftmaschine 1 zu belasten und dadurch die Standzeit des Systems zu verlängern. Das nach Abscheidung 3 nahezu ölfreie Blow-By-Gas wird vor den Abgasturbolader 7 und in Strömungsrichtung der Verbrennungsluft nach dem Luftfilter 6 in den Ansaugtrakt der Brennkraftmaschine 1 geleitet.

Diese hier beschriebene Variante der Kurbelgehäuseentlüftung mittels einer Pumpe 4 oder einem Verdichter 4 kann vorteilhaft in einem kompletten Ölmodul einer Brennkraftmaschine 1 realisiert werden.

## Patentansprüche

1. Vorrichtung zur Abscheidung von Öl aus den Kurbelgehäusegasen einer Brennkraftmaschine (1), wobei das gereinigte Gas dem Luftansaugweg der Brennkraftmaschine (1) wieder zugeführt wird mit einem Filterelement (3) und einer Druckbeaufschlagung des Kurbelgehäusegases zur Durchströmung des Filterelements (3), **dadurch gekennzeichnet, dass** zur Druckbeaufschlagung des Luftstroms eine Pumpe (4) oder ein Verdichter vor oder hinter dem Filterelement (3) angeordnet ist, wobei eine Regelung der Pumpe (4) oder des Verdichters in Abhängigkeit vom herrschenden Druck im Kurbelgehäuse erfolgt.

2. Vorrichtung nach Anspruch 1, **dadurch gekennzeichnet, dass** die Pumpe (4) als Vakuumpumpe ausgeführt ist, insbesondere als Drehschieberpumpe.

3. Vorrichtung nach Anspruch 1 oder 2, **dadurch gekennzeichnet, dass** die Pumpe (4) elektrisch angetrieben ist.

4. Vorrichtung nach einem der Ansprüche 1 oder 2, **dadurch gekennzeichnet, dass** die Pumpe (4) mechanisch angetrieben ist.

5. Vorrichtung nach Anspruch 4, **dadurch gekennzeichnet, dass** der Antrieb der Pumpe (4) durch eine mechanische Kopplung mit der Brennkraftmaschine (1) erfolgt und die Regelung des Druckes in der Vorrichtung durch eine ventilgesteuerte Bypass-Leitung erfolgt.

6. Vorrichtung nach einem der vorhergehenden Ansprüche, **dadurch gekennzeichnet, dass** das Filterelement (3) ein Luftentölelement ist, das aus einem Mikrofasermaterial, vorzugsweise Glasfaser, hergestellt ist, das zu einem Wickelelement oder zu einem sternförmigen Element geformt ist und insbesondere von Außen nach Innen durchströmt wird.

7. Vorrichtung nach einem der vorhergehenden Ansprüche, **dadurch gekennzeichnet, dass** ein zusätzlicher Vorabscheider (9) zur Abscheidung von Öl vorgesehen ist.

8. Vorrichtung nach Anspruch 7, **dadurch gekennzeichnet, dass** der Vorabscheider (9) in Strömungsrichtung vor der Pumpe (4) angeordnet ist.

9. Vorrichtung nach Anspruch 7 oder 8, **dadurch gekennzeichnet, dass** der Vorabscheider (9) ein Vorabscheider mit einem tangentialem Eintritt, insbesondere ein Zyklonabscheider ist.

10. Vorrichtung nach einem der vorhergehenden Ansprüche, **dadurch gekennzeichnet, dass** ein Nachabscheider (3) vorgesehen ist.

11. Vorrichtung nach Anspruch 1, **dadurch gekennzeichnet, dass** der Verdichter (4) ein Kompressorschraubenelement aufweist oder als Ladekompressor ausgestaltet ist.

12. Vorrichtung nach einem der vorhergehenden Ansprüche, **dadurch gekennzeichnet, dass** die die Vorrichtung ein Sicherheitsventil (11) hinter der Entnahmestelle des Kurbelgehäuseentlüftungsgases aufweist, welches einen unzulässig hohen Druck im Kurbelgehäuse verhindert.

13. Vorrichtung nach einem der vorhergehenden Ansprüche, **dadurch gekennzeichnet, dass** die die Vorrichtung ein Rückschlagventil (15) aufweist, dass bei unzulässiger Druckdifferenz zwischen Kurbelgehäuse und der Ölabscheidung (3, 9) einen Durchfluss des Öls aus dem Kurbelgehäuse in den Ansaugtrakt (5) verhindert und/oder ein Druckbegrenzungsventil (12), das die Druckdifferenz zwischen dem Unterdruck im Ansaugtrakt (5) und dem Druck in der Vorrichtung begrenzt.

14. Vorrichtung nach einem der vorhergehenden Ansprüche, **dadurch gekennzeichnet, dass** die die Vorrichtung einen hydraulisch angetriebenen Verdichter (4) aufweist, der stromabwärts auf der druckführenden Seite einer Ölpumpe (14) einer Brennkraftmaschine (1) mittels des Öldruckes angetrieben wird und auf der stromzuführenden Seite der Ölpumpe (14) das vom Ölabscheider (3, 9) abgeschiedene Öl ansaugt.
